# EUROPEAN PATENT APPLICATION

(11) **EP 4 060 117 A1**
(43) Date of publication of application: **21.09.2022**
(21) Application number: 22163055.1
(22) Date of filing: 18.03.2022
(51) Int. Cl.: E01C 13/02, F24S 10/75, F24S 20/64

(54) **TEMPERATURE CONTROLLED SPORTSFIELD**

(30) Priority: 19.03.2021 NL 2027779
(71) Applicant: Supersub Sportsystems B.V., 2382 PD Zoeterwoude (NL)
(72) Inventor: SARELSE, Eric, 2382 PD ZOETERWOUDE (NL)
(74) Representative: EP&C

(57) **Abstract**

Temperature-controlled sports field, such as a hockey field, tennis court or athletics track, in particular a solar-collector sports field for discharging solar heat. In a length direction (X) and width direction (Y), the sports field has at least one surface (A) with a top layer 2 and a substructure 1 which is provided with a hose system for passing through a heat-exchanging medium. The substructure has a bottom layer 3 which supports an underlayment 10. The underlayment is a synthetic mat with resilient supporting members 50 in order to provide impact-absorbing characteristics to the top layer 3 situated above it. The underlayment 10 has a bed for accommodating a hose 20 of the hose system therein. The synthetic mat is produced by injection-moulding material containing heat-conducting particles, such as a polypropylene material with a filling of aluminium flakes, resulting in an increase in the heat transfer of the synthetic mat.

## Description

The present invention relates to a sports field provided with a device for controlling the temperature, in particular for collecting and discharging solar heat, a so-called solar-collector sports field, more particularly a solar-collector playing field. At least a part of the surface area of the field is configured to accommodate a temperature-control means, in particular a heat-recovery means. In this context, temperature control means that a temperature of the sports field can be decreased or increased, for example in order to prevent freezing. The sports field may be connected to an installation for recovering energy from heat, for example a geothermal installation or an installation for converting thermal energy to electrical energy. In addition, the invention relates to a method for controlling a temperature of a sports field, in particular a method for recovering heat from a solar-collector sports field.

Sports fields have to meet a variety of requirements. Firstly, an upper surface of a sports field has to provide a required impact absorption value, a so-called sport-technical value. In order to prevent injuries, a sports field has to have an impact absorption value concerning the interaction with a player. The impact-absorbing characteristics of the sports field have to prevent excessive forces on the joints and tendons when moving across the sports field. If a player falls, the sports field has to absorb the impact energy, as a result of which, for example, a concussion may be prevented.

The prior art discloses several sports fields which can be heated or cooled and can serve as a solar-collector sports field.

EP0,770,733B1 describes a temperature-controlled sports field which can be used as an ice rink in winter and as an artificial pitch in summer. The sports field is composed of a top layer formed by an artificial pitch under which there is a substructure resting on a substrate. The sports field may be cooled or heated by means of a pipe system which is provided in the substructure. The pipe system is accommodated in a net-like segment which is situated on the substrate. If desired, a foil may be arranged over the substrate.

The problem with this sports field is that it does not meet the required impact-absorbing characteristics which apply to sports fields.

NL2011281 discloses a similar artificial pitch with heat-conducting means for conducting heat absorbed by the artificial pitch. The heat-conducting means may comprise a grid-shaped heat-conducting element which is accommodated in the support of the artificial pitch. In this case, the heat-conducting element preferably extends across virtually the entire surface area of the support. In this way, the heat-conducting element can efficiently conduct the heat absorbed by the artificial pitch.

Again, the problem with this artificial pitch is the insufficient degree of impact absorption.

NL2015181 B relates to a substructure for a playing field. The substructure is able to store and transport heat and cold. The playing field has a top layer comprising synthetic fibres which forms a synthetic grass pitch. There are three sublayers underneath the top layer, i.e. a first sublayer of fine granular material, a second sublayer of coarser granular material and an adjoining third sublayer identical to the first sublayer. Under the third sublayer, there is a water-permeable shock-absorbing layer provided with holes which are such that pipes are virtually accommodated in the holes. The pipes are situated at a mutual distance of at least 20 cm. A liquid conducting heat or cold is pumpable through the pipes. Under the shock-absorbing layer, there is also a drainage layer comprising drainage pipes. The playing field is a box-shaped enclosure and closed off on a bottom side by a housing which is provided with a layer of insulating material on an inner side. At various locations, temperature sensors are provided. A temperature sensor is placed on the artificial turf and a temperature sensor is also provided in the substructure. In addition, a temperature sensor is placed in front of the water inlet.

The problem with the substructure of the playing field is that the impact-absorbing characteristics are highly insufficient. In addition, the height of the substructure is considerable.

US 2005/0193669 describes a modular plastic tile for forming a floor covering over a floor surface, such as a tennis court or a basketball court. The tile is designed to absorb an impact. By controlled deformation of supporting members on the bottom side of the tile, the impact on a top side can be absorbed. Due to the presence of adjacent supporting members of different height, different impact-absorbing properties may be combined in one tile. As a result thereof, it is possible to lay a floor having satisfactory properties for bouncing a ball and also a good absorbing capacity in case a player causes an impact. Publication US2014/0237916 shows an identical modular plastic tile with a resilient support layer.

The problem with these modular plastic tiles is they have to be laid as a floor covering over a floor surface. The top side of these tiles serves as a surface which can be walked on by a player. This makes the application of forces reproducible and a suitable predetermined impact-absorbing response of the tiles is ensured. If a covering layer were to be provided over this floor covering and direct contact with these tiles were to consequently no longer take place, the optimum impact-absorbing capacity would be lost.

US8,668,403 describes an impact-absorbing synthetic panel which is configured to be used on a sports field, wherein the panel is configured to be laid under a floor surface as an underlayment. A top side of the panel has slots for draining off water via drainage holes in the panel. The panel has several projections on a bottom side on which it rests. The projections have a stepped cross section and thus provide a two-stage impact absorption. In a first stage, impact absorption is provided in order to absorb an impact caused by a load by a player. In a second stage, a greater impact absorption is provided in order to absorb a greater load than in the first stage, as a result of which an impact of, for example, a maintenance vehicle can be absorbed. Furthermore, it describes how drained water can be stored around the projections.

US2015/0368866 describes a system for controlling the temperature and moisture of an artificial pitch, which also absorbs an impact. The system is provided with interconnected panels which are sufficiently resilient to absorb an impact. On a bottom side, hoses through which a heat-exchanging liquid passes may be accommodated in a panel in order to control the temperature of the field.

EP1621673A2 describes a floor construction comprising tile-shaped floor elements which are fitted over a heat exchanger consisting of parallel pipes with an intermediate space. The pipes are accommodated in holes on a bottom side of the floor element, with ribs of the floor element being supported in the intermediate spaces between the pipes. Metal particles or a metal gauze may be provided between a pipe and a floor element in order to improve contact and thus heat transfer to the pipe.

WO2019/093893 and patent family member NL2019898 are publications in the name of the Applicant which describe a resilient panel which is to be fitted under a top layer as an underlayment. The underlayment is particularly suitable for use under a sports field in order to satisfy the applicable requirements with regard to impact-absorbing characteristics for that sports field.

A problem with known sports fields which are provided with such synthetic panels is that if these sports fields were to be used as a solar collector, the heat-energy yield is too low to justify the costs of constructing the sports field. Although a sports field can heat up considerably in summer, it has been found difficult in practice to remove this heat by means of a heat-exchanging liquid passing through hoses.

It is an object of the present invention to overcome at least one of the abovementioned drawbacks at least partly, or to provide a usable alternative. In particular, it is an object of the invention to provide a solar-collector sports field for supplying heated water to a solar-collector installation, wherein the degree of heat recovery of the sports field is sufficiently high to justify the construction costs.

This object is achieved by a temperature-controlled sports field according to claim 1. It should be noted that the term sports field should be interpreted in the broad sense of the word, i.e. as a field which is configured for playing a sport, such as a football pitch, hockey field, tennis court, or an athletics track.

The sports field is characterized by the fact that a surface which can be walked on satisfies a predetermined sport-technical value, which means that the sports field has predetermined impact-absorbing characteristics. The sport-technical value of a sports field serves to prevent injuries by reducing loads on joints and tendons, or to boost playing characteristics.

A sports field may at least partly be configured as a temperature-controlled sports field. The sports field has at least one surface with a length and a width direction, wherein the surface is provided with a hose system for temperature control. In this case, temperature control means that a temperature of the sports field can be decreased or increased. In particular, the sports field may be configured as a solar-collector sports field for heat recovery. The solar-collector sports field may be connected to an installation for recovering energy from heat, for example a geothermal installation or an installation for converting thermal energy to electrical energy.

The temperature-controlled sports field according to the invention has a top layer and a substructure. The substructure is provided with a hose system for passing through a heat-exchanging medium. The substructure comprises a bottom layer which supports an underlayment. The underlayment comprises a synthetic mat with resilient supporting members in order to provide the impact-absorbing characteristics to the top layer situated above it. The underlayment is configured to accommodate a hose of the hose system at least partly, but preferably completely, in a bed. In order to receive the hose, the bed is open at a top side or bottom side of the underlayment.

Due to the fact that a hose in the bed is at least partly accommodated in the underlayment, the diameter of the hose advantageously hardly contributes, if at all, to the total height of the layers which form the temperature-controlled sports field.

The bed comprises heat-conducting material. The bed is formed in the synthetic mat. The synthetic mat is formed by means of injection moulding. The synthetic mat is made of a material which contains heat-conducting particles. Advantageously, the bed of heat-conducting material provides a good conduction of heat. Due to the presence of heat-conducting material, heat is passed to the heat-exchanging medium in the hose more quickly. By improving the heat transmission per surface area of the temperature-controlled sports field, heat recovery can be increased and an investment in a solar-collector sports field can be recouped within a period which is attractive from an economical point of view.

By making the synthetic mat from a material containing heat-conducting particles, such as graphite or aluminium particles, by means of an injection-moulding production process, separate components, such as a foil or a hose holder made of sheet material, for improving the heat transfer may be omitted. The temperature-controlled sports field can simply be composed of three layers and can consist of a bottom layer, for example a layer of closed-cell foamed concrete, wherein the bottom layer supports the synthetic mat with the top layer provided on top thereof.

In one embodiment of the temperature-controlled sports field, the synthetic mat is made of a polypropylene material which contains aluminium flakes as heat-conducting particles. In order to keep the injection-moulding process controllable, the polypropylene material preferably comprises a volume percentage of at most 20%, in particular at most 15%, of aluminium flakes. In particular, the polypropylene material comprises a volume percentage of at least 5%, in particular at least 10%, of aluminium flakes. Preferably, the aluminium flakes have a size of at least 1 µm and at most 20 µm, in particular at least 5 µm and at most 15 µm. A synthetic mat may be made of a network of base elements produced by means of injection moulding which are connected to each other by connectors, and wherein the base elements are made by injection-moulding a polypropylene material containing heat-conducting particles, preferably aluminium flakes with a flake size of, for example, 9 µm. The use of aluminium flakes which have been incorporated in the polypropylene material of the synthetic mat by means of an injection-moulding production process is advantageous in order to produce a sports field having a good heat conduction and which can be constructed at a price which is acceptable in the marketplace.

Preferably, the bed for accommodating a hose is provided on a top side of the underlayment. Instead of placing the hose on a bottom side of the synthetic mat, the bed is provided at a top side nearer to the top layer, which contributes to a faster heat transfer from and/or to the heat-exchanging medium in the hose system. Preferably, a hose accommodated in the bed is completely under a surface which forms the top side of the underlayment, in such a way that the top layer rests entirely on the underlayment. More preferably, an accommodated hose bears against the surface which forms the top side of the underlayment in order to optimize the heat transmission. In addition, due to the position underneath the top side, the hose accommodated in the bed does not have to have any effect on a sport-technical value of the sports field.

In a further or alternative embodiment of the temperature-controlled sports field, the polypropylene material may comprise graphite particles as heat-conducting particles. The bed may comprise a metal-containing and/or carbon-containing material, in particular graphite material, as heat-conducting material. A heat-conducting material may be provided in the bed in the form of an insert, or may form an integral part of the bed. Preferably, the bed comprises an aluminium material which has a thermal conduction coefficient of 237 W/(m*K). Preferably, the heat-conducting material has a thermal conduction coefficient of at least 50 W/(m*K), for example steel, in particular at least 70 W/(m*K), for example iron-containing material. Graphite with a thermal conduction coefficient of 160 W/(m*K) is advantageous in an embodiment in which the thermal conduction material forms an integral part of the synthetic mat by, for example, incorporating graphite particles when injection-moulding the underlayment or by adding graphite by means of a surface treatment, for example by coating.

In one embodiment of the temperature-controlled sports field according to the invention, the hose is directly accommodated in a bed of the underlayment, wherein the underlayment comprises metal-containing particles, preferably aluminium particles. The metal-containing particles may have been included during the injection-moulding process of the underlayment. Metal-containing particles may be provided by means of a metal coating or the application of a layer of paint. The presence of the metal-containing particles in the synthetic underlayment increases the conduction of heat of the underlayment. By incorporating metal-containing particles in the underlayment, the temperature-controlled sports field may be constructed without panel-shaped hose holder. As an alternative to metal-containing particles, carbon-containing particles, in particular graphite particles, may be provided.

In one embodiment of the temperature-controlled sports field according to invention, the synthetic mat which forms the underlayment comprises a network of base elements which are connected to each other by connectors. Preferably, the synthetic mat has a partially open structure. More preferably, the partially open structure results in at least 50% of the top side of the synthetic mat being open, in such a way that the synthetic mat is permeable to water to a high degree.

In particular, the sports field has a top layer on top of a water-containing substructure. Preferably, the top layer is a water-permeable top layer, in such a way that rainwater is able to seep through the surface to the substructure in the gravitational direction. In the case of a water-impermeable top layer, water may be carried away to the substructure via a gutter device in an edge region. The water-permeable substructure may comprise a layer formed by a synthetic mat. The use of an underlayment according to the patent NL2019898 under the top layer is advantageous, because this underlayment provides an accurately reproducible sport-technical value to a top layer and is also water-permeable in a lateral direction. Preferably, the synthetic mat has such a configuration, in which the bed for accommodating a hose is formed by U-shaped supporting members. Each supporting member also forms a base for the mat to rest on the bottom layer. Preferably, connectors between base elements are also formed by U-shaped supporting members.

In one embodiment of the temperature-controlled sports field, the bottom layer of the substructure is made of a concrete material, in particular a closed-cell foamed concrete material. Preferably, the assembly of the temperature-controlled sports field consists of only three layers, i.e. a bottom layer, an underlayment and a top layer. The temperature-controlled sports field is formed by arranging only these three layers on top of each other.

A temperature-controlled sports field system comprises a pump for passing heat-exchanging medium through the hose system. In one embodiment of the system, the substructure may furthermore comprise temperature sensors for measuring a temperature of the sports field in order to actuate the pomp.

In one embodiment of the temperature-controlled sports field according to the invention, the hose is accommodated in a panel-shaped hose holder which fits in the bed. The hose holder comprises heat-conducting material, as a result of which the bed is provided with additional heat-conducting material after fitting. The hose holder is a separate component. The dimensioning of the hose holder is adapted to the underlayment. The hose holder is preferably not bonded and freely removable from the bed of the underlayment.

The panel-shaped hose holder may be made of a closed or at least partially open sheet material, a foil material or a net material. Preferably, the hose holder has a thickness of at most 1 mm. Preferably, the hose holder comprises an aluminium material. The aluminium material ensures high conduction of heat and is also moistureproof.

In one embodiment, the hose holder has a rectangular outer periphery with a slot extending in a length direction for accommodating the hose therein. The slot forms a recess in the sheet material and fits in the bed of the underlayment. For good conduction of heat, the slot preferably has a slot bottom with a circular cross section, so that the hose is accommodated in such a way that it bears against the hose holder.

In one embodiment of the temperature-controlled sports field, the hose holder is produced by bending sheet material. The hose holder may be produced by only bending a flat sheet.

In one embodiment, the hose holder is made of a foil material, in particular a metal foil. Preferably, the foil material has a metal-containing foil layer. Preferably, the foil material is provided with a metal coating. In the temperature-controlled sports field, the hose is preferably at least partly enclosed by the foil material in the bed. Preferably, the foil material is fixedly bonded to the hose, in such a way that the hose and the foil material form a single piece. Fewer separate components are advantageous when installing the temperature-controlled sports field.

In one embodiment of the temperature-controlled sports field, the foil material comprises at least one elongate weakened portion. The elongate weakened portion may be formed, for example, by a linear narrowing section or perforation. The narrowing section may be produced by a notch. During installation of the sports field, the foil material is placed over the underlayment with beds, with the weakened portion being positioned above a bed of the underlayment. Subsequently, the weakened portion may be broken by pushing a hose through it. When the hose is pushed into the bed, a portion of the foil material will be carried along into the bed, so that a side wall of the bed is given a foil coating. It is advantageous that the foil material is thus fixed in the bed and, in addition, this provides a good conduction of heat.

Preferably, the entire underlayment is covered with a foil material which is provided with elongate weakened portions with a pitch which corresponds to a pitch of the beds in the underlayment.

In an alternative embodiment according to invention, the hose holder comprises a net material, wherein the net is formed by metal-containing threads. Preferably, the hose holder comprises clamping pieces in order to couple the hose to the net material. The net material is advantageous due to its permeability to water.

Preferably, the hose holder has at least one side member. The side member extends over the underlayment. More preferably, a central portion of the hose holder has a slot which is formed by a recess for accommodating the hose, wherein a side member is provided on either side of the slot. Preferably, the side member is at least partly perforated. The presence of a perforated zone in the side member improves the water permeability of the underlayment, while a large surface of the underlayment is also covered to provide good heat transfer.

In one embodiment of the sports field according to the invention, the at least one side member of the hose holder is positioned between two neighbouring hose portions, wherein a surface covered by the side member, viewed in a direction transverse to the hose direction, covers at least 50% of an intermediate surface. Preferably, the side member of the hose holder is rectangular and has a length and a width, the width of a side member of the hose holder being at most equal to half the width of a base element, also referred to as a tile, of the synthetic mat.

In one embodiment of the temperature-controlled sports field, the substructure may comprise a foil layer, the foil layer being positioned between the underlayment and the bottom layer. This foil layer is thus situated under the underlayment. Preferably, this foil layer is provided with a reflecting coating, in particular a metal coating, so that incident radiation is reflected. Reflection makes it possible to further increase the heat recovery.

In addition, the invention relates to a foil material for use in a temperature-controlled sports field according to the invention, comprising at least one elongate weakened portion, in particular a linear narrowing section or partially open portion, wherein in particular neighbouring weakened portions are positioned in accordance with a pitch between neighbouring beds of an underlayment. The linear narrowing section may have been produced, for example, by treating the foil material with a pressure roller. A linear portion may have been produced, for example, by a cutting, punching or laser treatment.

In addition, the invention relates to the use of a temperature-controlled sports field, in particular for recovering heat from a solar-collector sports field according to the invention.

By passing heat-exchanging medium through the hoses, heat which has been absorbed by the field can be carried away to a solar-collector installation near the field in order to generate energy. The supply duct system and the discharge duct system are couplable to the solar-collector installation which is configured to generate energy from heated water originating from the sports field. The solar-collector installation may be configured, for example, to convert heat to electrical energy or may be a geothermal installation which is configured to store heat in a substrate. It should be noted that this relates to the solar-collector sports field. A solar-collector installation as such is not the subject matter of the invention. Solar-collector installations for use in combination with a solar-collector field are generally known in the prior art and therefore do not require any further explanation.

Embodiments according to the invention are further defined in the following clauses:
1. Temperature-controlled sports field, such as a hockey field, tennis court or athletics track, in particular a solar-collector sports field which is configured for heat recovery, wherein the field, in a length direction (X) and width direction (Y), has at least one surface (A) with a top layer and a substructure which is provided with a hose system for passing through a heat-exchanging medium, wherein the substructure comprises a bottom layer which supports an underlayment, wherein the underlayment comprises a synthetic mat with resilient supporting members in order to provide impact-absorbing characteristics to the top layer situated above it, and wherein the underlayment has a bed for accommodating a hose of the hose system therein, wherein the hose lies in a bed comprising a heat-conducting material.
2. Temperature-controlled sports field according to clause 1, wherein the bed for accommodating a hose is provided on a top side of the underlayment.
3. Temperature-controlled sports field according to clause 2, wherein a hose accommodated in the bed is situated completely under a surface which forms the top side of the underlayment, in such a way that the top layer rests directly and entirely on the underlayment providing impact absorption.
4. Temperature-controlled sports field according to clause 3, wherein a hose accommodated in the bed bears against the surface which forms the top side of the underlayment.
5. Temperature-controlled sports field according to one of the preceding clauses, wherein the hose is accommodated in a panel-shaped hose holder.
6. Temperature-controlled sports field according to clause 5, wherein the hose holder has a rectangular outer periphery with a slot which extends in the length direction, fits in the bed and is configured for accommodating the hose.
7. Temperature-controlled sports field according to clause 6, wherein the slot has a bottom with a curve in cross section.
8. Temperature-controlled sports field according to clause 5, wherein the panel-shaped hose holder is made of a foil material which is in particular provided with a metal-containing foil layer, more particularly with a metal coating.
9. Temperature-controlled sports field according to clause 8, wherein the foil material at least comprises an elongate weakened portion, in particular a linear narrowing section or partially open portion, wherein, in particular, neighbouring weakened portions in the foil material are positioned according to a pitch between neighbouring beds of an underlayment, in such a way that a hose can be pushed through the weakened portion of the foil material and into the bed during installation of the sports field.
10. Temperature-controlled sports field according to clause 8, wherein the foil material is bonded to the hose.
11. Temperature-controlled sports field according to one of clauses 5 - 7, wherein the hose holder is made from a net material, wherein a net is made from metal-containing threads.
12. Temperature-controlled sports field according to one of the preceding clauses, wherein the hose holder has at least one side member, in particular wherein the hose holder has a side member on either side of the slot for accommodating a hose or on either side of a weakened portion or on either side of a fixedly bonded hose.
13. Temperature-controlled sports field according to clause 12, wherein, in an assembly, the at least one side member of the hose holder is positioned between two neighbouring hose portions, wherein the at least one side member, viewed in a direction transverse to the hose direction, covers at least 50% of an intermediate surface of the underlayment.
14. Temperature-controlled sports field according to clause 12 or 13, wherein the side member of the hose holder is rectangular and has a length and a width, the width of a side member of the hose holder being at most equal to half the width of a base element.
15. Temperature-controlled sports field according one of clauses 12-14, wherein the side member of the hose holder is at least partly open, in particular perforated.
16. Temperature-controlled sports field according to one of the preceding clauses, wherein the synthetic mat is made of material containing heat-conducting particles, in particular is made of a synthetic material containing metal particles or graphite particles, wherein, in particular, the particles are incorporated in the synthetic mat in an injection-moulding production process or are applied to the synthetic mat in a coating process, such as painting or coating.
17. Temperature-controlled sports field according to one of the preceding clauses, wherein the synthetic mat comprises a network of base elements which are connected to each other by connectors.
18. Temperature-controlled sports field according to clause 16 or 17, wherein the synthetic mat has a partially open structure, wherein at least 50% of a top side of the partially open structure is open.
19. Temperature-controlled sports field according to clause 17 or 18, wherein the synthetic mat comprises U-shaped supporting members for supporting the mat on the bottom layer, wherein the bed for accommodating a hose is made from the U-shaped supporting members.
20. Temperature-controlled sports field according to one of clauses 17 - 19, wherein U-shaped supporting members also form a connector for coupling mutually adjacent base elements in a network.
21. Temperature-controlled sports field according to one of the preceding clauses, wherein the substructure comprises a foil material which is situated under the synthetic mat, in particular directly over the bottom layer.
22. Foil material for use in a temperature-controlled sports field according to one of the preceding clauses, comprising at least one elongate weakened portion, in particular a linear narrowing section or a partially open portion which is partly open along a line, wherein in particular neighbouring weakened portions are positioned according to a pitch between neighbouring beds of an underlayment.
23. Use of the temperature-controlled sports field according to one of clauses 1-21 for controlling the heat of a sports field, in particular for recovering heat from a solar-collector sports field, comprising a step of passing a heat-exchanging medium through a hose system in the substructure of the temperature-controlled sports field.
24. Method for installing a temperature-controlled sports field, in particular according to one of clauses 1-21, wherein a foil material is applied in a method step over an underlayment with a bed which is open towards the top, wherein the foil material has an elongate weakened portion which is placed over the bed in a method step, and wherein the weakened portion is broken in a method step by pushing a hose through the weakened portion of the foil material, in such a way that a portion of the foil material moves with the hose into the bed and this portion forms a foil coating for at least a portion of the bed.

The invention will be explained in more detail by means of the attached drawings. The drawings provide a practical embodiment of the invention which should not be viewed as being limiting. Specific characterizing details may also be viewed as being characteristic of the invention in a general sense, independently from the exemplary embodiment, in which:
Fig. 1 shows a perspective view of a temperature-controlled sports field with a top layer on top of an underlayment comprising a hose system;
Fig. 2 shows a perspective view of a top side of the underlayment with a hose of a hose system embedded therein;
Fig. 3 shows a top view of the underlayment from Figs. 1 and 2;
Fig. 4 shows a cross-sectional view of the bed with a hose accommodated in the underlayment panel; and
Fig. 5 shows a cross-sectional view of a hose which is directly accommodated in the underlayment, wherein the underlayment comprises heat-conducting particles; and
Fig. 6 shows a cross-sectional view of a hose which is accommodated in a bed whose side walls are covered with a portion of the foil material which is arranged over the underlayment.

In the figures, identical reference numerals have been used to denote similar components. In order to render the understanding of the description and the claims simpler, the terms under, above, vertical, horizontal, longitudinal, transverse, central' are used with reference to the force of gravity and the X, Y, Z, coordinate system, which terms are to be understood in a technically functional sense and should not be interpreted as limiting the scope of protection.

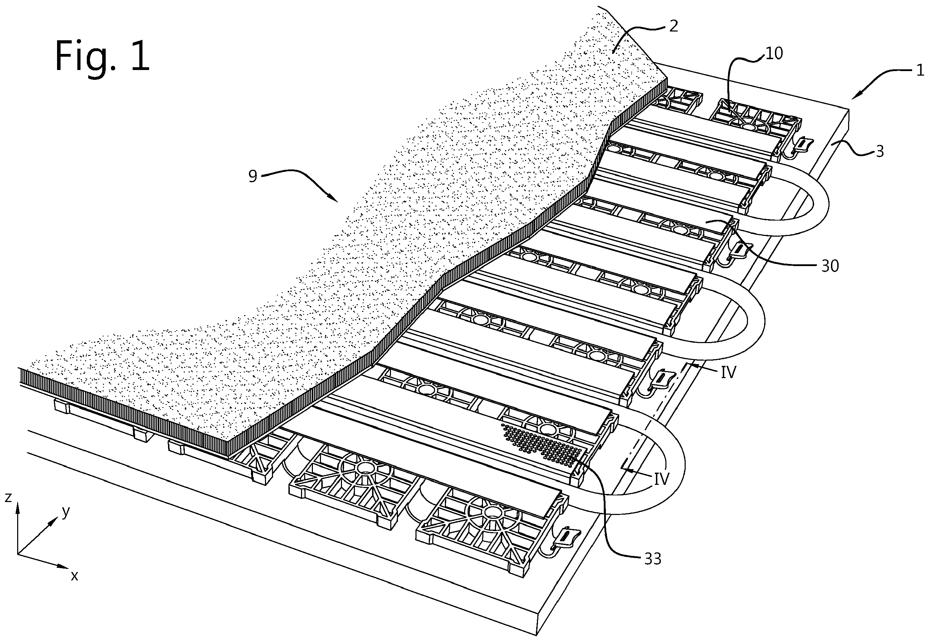

The invention relates to a temperature-controlled sports field, in particular a solar-collector sports field 9 as shown in Fig. 1. The sports field is, for example, configured as a hockey field, tennis court or athletics track. The solar-collector sports field is configured to collect heat from solar radiation. The sports field has at least one surface A which can be walked on, has a length direction X and a width direction Y and is configured to recover heat.

The sports field has a substructure 1 and a top layer 2. The top layer 2 is, for example, an artificial pitch or a layer for a cinder track paved with pebbles. Preferably, the top layer is permeable to water.

The substructure 1 comprises a bottom layer 3 which supports an underlayment 10. The top layer 2 is situated on the underlayment 10. The bottom layer 3 preferably comprises a layer of closed-cell foamed concrete. The underlayment 10 is configured to provide a sport-technical value to the top layer 2.

In this case, the top layer 2 rests directly on the underlayment 10. No filling of granular material or the like has been used between the top layer 2 and the underlayment 10. This has the advantage that impact-absorbing characteristics are in this case determined virtually entirely by the underlayment 10, in which an anticipating impact-absorbing force generated by the underlayment has a direct effect on the top layer 2.

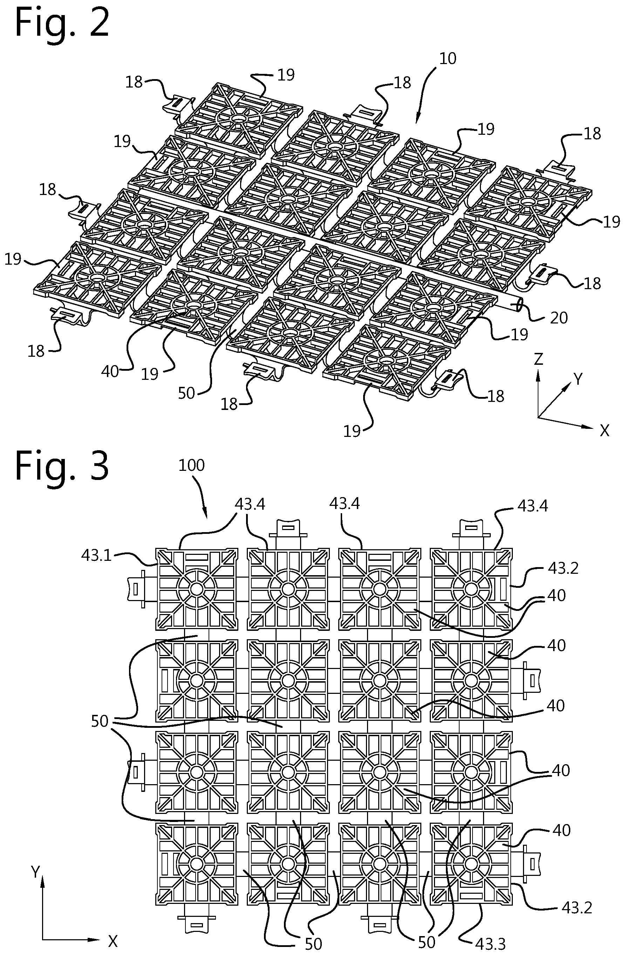

The underlayment 10 supports the top layer 2. As shown further in Figs. 2 and 3, the underlayment 10 comprises a synthetic mat with resilient supporting members 50, by means of which the underlayment 10 rests on the bottom layer 3. The resilient supporting members of the underlayment 10 provide certain impact-absorbing characteristics to the top layer 2, also referred to as a sport-technical value.

In this case, the supporting members 50 are U-shaped. Here, the supporting members 50 also form connectors for connecting adjacent base elements 40. The base elements, also referred to as tiles, of the underlayment are situated at a higher level than the bottom layer 3. There is an intermediate space between the base elements and the underlayment, as a result of which the base elements are able to move slightly. This degree of freedom of movement provides the top layer situated on top with the desired sport-technical value.

In this case, each base element 40 is rectangular, in particular square. Each base element 40 has a dimension of at most 10 x 10 cm. Empirical tests have shown that a base element having a dimension of approx. 75 x 75 mm ± 5 mm is advantageous in order to meet the required sport-technical values. Each base element has a top side 41 and a bottom side 42 with a peripheral wall 43 comprising a first side wall 43.1, second side wall 43.2, a third side wall 43.3 and a fourth side wall 43.4. On the bottom side 42, the base element is provided with a stop 60. The stop 60 prevents excessive deformation of the connectors around every base element 40.

As shown in Fig. 3, a matrix comprised of a number of base elements 40 forms an underlayment panel 100. The underlayment panel 100 here has a matrix of 4x4 base elements 40. The underlayment 10 is composed of a plurality of underlayment panels, wherein neighbouring underlayment panels may be coupled to each other by U-shaped connectors 50 which comprise a male coupling part 18 or a female coupling part 19.

The substructure 1 is provided with a hose system with at least one hose 20 for passing a heat-exchanging medium, for example water, glycol or a mineral oil, through the substructure. The hose 20 is accommodated in a bed containing heat-conducting material. Accommodating the hose 20 in the bed containing heat-conducting material contributes to heat recovery. Due to the bed, the hose is at least partly recessed in the underlayment. The bed ensures conduction of heat to the thermal medium in the hose. Heat around the hose 20 is transferred to the thermal medium through conduction of heat.

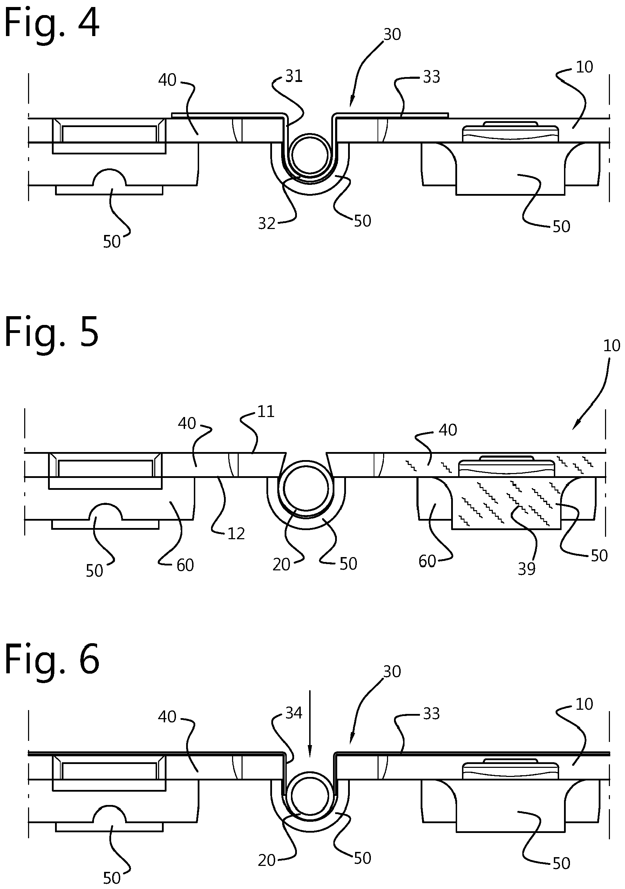

Fig. 1 shows a bed of the hose 20 in the top side 41 of the underlayment, wherein the hose is situated in a hose holder 30. Fig. 4 shows the hose holder 30 in a cross section. The hose holder 30 is panel-shaped. Here, the hose holder is formed by simple bending of an aluminium sheet. The hose holder 30 has a rectangular outer periphery. Here, the sheet has a thickness of at most 1 mm. The hose holder has a slot 31 for accommodating a hose. The slot 31 extends in a length direction of the hose holder 30. The slot 31 has a rounded slot bottom 32. As shown in Fig. 4, the bottom of the slot has a circular cross section, so that the hose 20 bears against the slot bottom 32 when it is accommodated in the hose holder 30. The fact that the hose 20 bears against the bottom of the slot contributes to good conduction of heat.

In Fig. 2, and as shown in Fig. 5 in a cross-sectional view, a bed of the hose 20 is integrally formed in the underlayment 10. The hose 20 is directly accommodated in the underlayment. The underlayment 10 comprises heat-conducting particles 39, metal particles or graphite particles, which contribute to the thermal conduction of the synthetic underlayment. The particles 39 may be globules or fibres. Preferably, a particle has a maximum size of at most 10 mm. The particles are incorporated in the synthetic material during the production of the synthetic underlayment by injection moulding.

Fig. 6 shows a cross-sectional view of an underlayment 10 with a hose holder 30. The bed of the hose holder 30 forms a part of the underlayment 10 and is provided with a foil material. The underlayment 10 has a U-shaped connector 50 which forms a supporting member so that the underlayment can rest on the bottom layer 3. The U-shaped connector 50 also forms the bed for accommodating the hose 20.

The bed of the hose holder 30 is at least partly covered with the heat-conducting foil material. A portion of the foil material extends inside the bed of the hose holder 30. The portion is a foil coating 34 of the bed. The foil coating 34 extends over side wall portions of the bed.

A portion of the foil material forms a side member 33, as in Fig. 4, which extends over the top side 41 of the underlayment 10. The side member 33 contributes to an increased thermal conduction from or to a heat-exchanging medium which is passed through the hose 20.

The foil material is preferably an aluminium foil material. Preferably, the foil material has a thickness of at most 0.2 mm, more particularly of at most 0.1 mm.

Preferably, the foil material is provided with a predetermined elongate weakened portion, so that the foil material can be opened at that location when a hose 20 is pushed into it. The weakened portion is preferably linear. The weakened portion may be formed, for example, by perforations along a straight line. The weakened portion may be a linear thinning of the foil material. The linear thinning may have been produced in the foil material using, for example, a roller under pressure. The weakened portion may also have been produced in the foil material, for example, by means of a laser treatment or a punching operation.

The weakened portion may be torn by pushing the hose 20 into the bed. In a method step for installing a sports field, the hose 20 can be pushed through the foil material and into the bed. When pushing in the hose 20, a portion of the foil material on either side of the hose 20 moves concomitantly into the bed, as a result of which the side walls of the bed are covered with the foil coating 34.

Preferably, the temperature-controlled sports field has a foil material, wherein the foil material covers the entire top side of the underlayment 10. The foil material is provided with mutually equidistant weakened portions according to a pitch of adjacent beds of the underlayment 10, for example a pitch of 10 cm. After the foil material has been provided over the underlayment 10, a hose may be arranged over the weakened portion in the foil material. As is indicated by an arrow in Fig. 6, the hose can then be pushed through the weakened portion in the bed of the foil material. Advantageously, the foil material may thus be clamped into the bed and a good thermal conduction is achieved.

In this way, a temperature-controlled sports field is provided, in particular a solar-collector sports field for discharging heat. In a length direction and width direction, the sports field has at least one surface with a top layer and a substructure which is provided with a hose system for passing through a heat-exchanging medium. The substructure has a bottom layer which supports an underlayment. The underlayment is a synthetic mat with resilient supporting members in order to provide impact-absorbing characteristics to the top layer situated above it. The underlayment has a bed for accommodating a hose of the hose system therein. The synthetic mat is produced by injection-moulding a material containing heat-conducting particles, for example a polypropylene material with a filling of aluminium flakes, as a result of which a heat transfer from and/or to the heat-exchanging medium in the hose system is increased.

**List of reference numerals:**

| | | | |
|---|---|---|---|
| X | direction | | |
| Y | direction | 30 | hose holder |
| Z | direction | 31 | slot |
| A | heat-recovery surface | 32 | slot bottom |
| | | 33 | side member |
| 9 | temperature-controlled sports field | 34 | foil coating |
| 1 | substructure | 39 | heat-conducting particle |
| 2 | top layer | | |
| 3 | bottom layer | 40 | base element |
| | | 41 | top side |
| 10 | underlayment; synthetic mat | 42 | bottom side |
| 100 | underlayment panel | 43 | peripheral side wall |
| 11 | top side | 43.1 | first side wall |
| 12 | bottom side | 43.2 | second side wall |
| 13 | peripheral side wall panel | 43.3 | third side wall |
| 17 | coupling element | 43.4 | fourth side wall |
| 18 | coupling part (male) | | |
| 19 | coupling part (female) | 50 | U-shaped connector; supporting member |
| 20 | hose | 60 | stop |

## Claims

1. Temperature-controlled sports field, such as a hockey field, tennis court or athletics track, in particular a solar-collector sports field which is configured for heat recovery, wherein the field, in a length direction (X) and width direction (Y), has at least one surface (A) with a top layer and a substructure, wherein the substructure is provided with a hose system for passing through a heat-exchanging medium, wherein the substructure comprises a bottom layer which supports an underlayment, wherein the underlayment comprises a synthetic mat with resilient supporting members in order to provide impact-absorbing characteristics to the top layer situated above it, and wherein the underlayment has a bed comprising a heat-conducting material for accommodating a hose of the hose system therein, wherein the synthetic mat is made from a material containing heat-conducting particles by means of injection moulding.

2. Temperature-controlled sports field according to claim 1, wherein the synthetic mat is made from a polypropylene material containing aluminium flakes as a filling as heat-conducting particles, wherein the aluminium flakes in particular have a size of at least 1 µm and at most 20 µm, more particularly a size of at least 5 µm and at most 15 µm.

3. Temperature-controlled sports field according to claim 1 or 2, wherein the polypropylene material comprises a volume percentage of at most 20%, in particular at most 15%, of aluminium flakes.

4. Temperature-controlled sports field according to one of the preceding claims, wherein the polypropylene material comprises a volume percentage of at least 5%, in particular at least 10%, of aluminium flakes.

5. Temperature-controlled sports field according to one of the preceding claims, wherein the polypropylene material comprises graphite particles as heat-conducting particles.

6. Temperature-controlled sports field according to one of the preceding claims, wherein the bed is provided on a top side of the underlayment and wherein a hose accommodated in the bed is situated completely under a surface which forms the top side of the underlayment, in such a way that the top layer rests directly and entirely on the underlayment providing impact absorption.

7. Temperature-controlled sports field according to claim 6, wherein a hose accommodated in the bed bears against the surface which forms the top side of the underlayment.

8. Temperature-controlled sports field according to one of the preceding claims, wherein heat-conducting particles are applied to the synthetic mat by means of a coating process, such as painting or coating.

9. Temperature-controlled sports field according to one of the preceding claims, wherein the synthetic mat comprises a network of base elements which are connected to each other by connectors.

10. Temperature-controlled sports field according to one of the preceding claims, wherein the synthetic mat has a partially open structure, wherein at least 50% of a top side of the partially open structure is open.

11. Temperature-controlled sports field according to one of the preceding claims, wherein the synthetic mat comprises U-shaped supporting members for supporting the mat on the bottom layer, wherein the bed for accommodating a hose is made from the U-shaped supporting members.

12. Temperature-controlled sports field according to claim 11, wherein the U-shaped supporting members also form a connector for coupling mutually adjacent base elements in a network.

13. Temperature-controlled sports field according to one of the preceding claims, wherein the substructure comprises a foil material which is situated under the synthetic mat, in particular directly over the bottom layer.

14. Use of the temperature-controlled sports field according to one of the preceding claims for controlling the heat of a sports field, in particular for recovering heat from a solar-collector sports field, comprising a step of passing a heat-exchanging medium through a hose system in the substructure of the temperature-controlled sports field.
